# EUROPEAN PATENT SPECIFICATION

(11) **EP 2 173 801 B1**
(45) Date of publication and mention of the grant of the patent: **02.09.2015**
(21) Application number: 08781882.9
(22) Date of filing: 16.07.2008
(51) Int. Cl.: C08K 3/32, C08K 5/3492, C08K 5/5333, C08L 27/18, C08L 67/02, C08L 85/02, C08L 101/00

(54) **FLAME RETARDANT ENGINEERING POLYMER COMPOSITIONS**
FLAMMGEHEMMTE TECHNISCHE KUNSTSTOFFZUSAMMENSETZUNG
COMPOSITIONS DE POLYMÈRE INDUSTRIELLES IGNIFUGES

(30) Priority: 16.07.2007 US 949970 P
(43) Date of publication of application: 14.04.2010
(73) Proprietor: FRX POLYMERS, INC., Chelmsford MA 01824 (US)
(72) Inventor: FREITAG, Dieter, 47802 Krefeld (DE); STAHL, Gad, M.p. Negev (IL); LEBEL, Marc, Chelmsford, Massachusetts 01824 (US)
(74) Representative: Müllejans, Inge
(86) International application number: PCT/US2008/070131
(87) International publication number: WO 2009/012286

(56) References cited:
- US-A- 5 837 760
- US-A1- 2002 156 160
- US-A1- 2004 167 284

## Description

### B. Cross-Reference to Related Applications:

### F. Background:

### 1. Field of Invention:

The compositions described herein are generally related to flame retardant engineering plastics that exhibit excellent processing characteristics and thermal and mechanical properties. The invention also relates to methods for preparing such compositions and articles of manufacture prepared from these flame retardant compositions.

### 2. Description of Related Art:

Commodity engineering plastics such as, for example, polyesters, polyamides, polycarbonates, polyacrylates, polystyrenes and the like are used in a variety of applications. Most engineering plastics are not inherently fire resistant and consequently specific additives such as, for example, brominated compounds and polymers, metal containing compounds and phosphorus containing compounds, must be added to engineering plastics to impart fire resistance. However, such additives typically have deleterious effects on the processing characteristics, glass transition temperature, heat distortion temperature, optical clarity or other properties, and recently the use of halogenated and metal-containing flame retardant additives has been eliminated due to environmental concerns.

There is a need for fire resistant engineering polymer compositions that also possess an acceptable combination of properties including, for example, melt processability, mechanical properties, thermal stability, operating temperature, and the like, as well as a need to provide flame retardant engineering plastic formulations that do not include halogenated or metal containing flame retardant additives.

### G. Brief Summary of the Invention:

Embodiments of the invention are directed to a polymer composition including an engineering plastic; melamine or a derivative or salt thereof; and a linear or branched polyphosphonate or copolyphosphonate or combination thereof. In some embodiments, the engineering plastic may be 15 % to 90 % by weight of the total composition, and in certain embodiments, the engineering plastic may include without limitation polycarbonates polyacrylates, polyacrylonitriles, polyesters, polyamides, polystyrenes, polyureas, polyurethanes, polyepoxies, poly(acrylonitrile butadiene styrene)s, polyimides, polyarylates, poly(arylene ether)s, polyethylenes, polypropylenes, polyphenylene sulfides, poly(vinyl ester)s, polyvinyl chloride, bismaleimide polymer, polyanhydride, liquid crystalline polymer, cellulose polymer and copolymers and combinations thereof. In some embodiments, the engineering plastic may be poly(ethylene terephthalate), poly(butylene terephthalate), poly(naphthylene terephthalate) or mixtures or copolymers thereof, and in particular embodiments, the engineering plastic may be crystalline or semi-crystalline.

In some embodiments, the melamine or a derivative or salt thereof may be melamine cyanurate, and in other embodiments, the melamine or a derivative or salt thereof may be 5 % to 20 % by weight of the total composition.

In some embodiments, the linear or branched polyphosphonate of copolyphosphonate may have a weight average molecular weight (Mw) of at least 20,000, and in certain embodiments, the linear or branched polyphosphonate or combination thereof is 5 % to 40 % by weight of the total composition. In particular embodiments, the linear or branched polyphosphonate or copolyphosphonate may include one or more blocks having one or more structural units of formula: 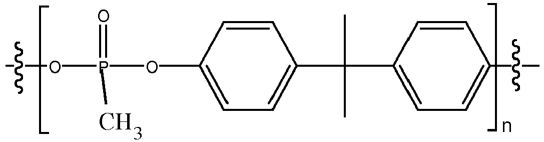 wherein n is an integer, and in some embodiments, the linear or branched polyphosphonate or copolyphosphonate further include one or more carbonates.

In still other embodiments, the polymer compositions of the invention may also include one or more components such as, for example, a filler, glass fibers, carbon fibers, inorganic fibers, organic fibers, fillers, surfactants, organic binders, polymeric binders, cross-linking agents, coupling agents, anti-dripping agents, TEFLON®, colorants, inks, dues, antioxidants and combinations thereof. In some embodiments, the composition may include TEFLON® up to 1 % by weight of the total composition, and in other embodiments, the composition may be up to 40 % by weight of the total composition glass fiber.

In certain embodiments, the linear or branched polyphosphonate or copolyphosphonate may be prepared from phosphonic diaryl ester that is distilled or wherein the linear or branched polyphosphonate or copolyphosphonate may be prepared from phosphonic acid diaryl ester that is undistilled.

Other embodiments of the invention include an article of manufacture produced from a polymer composition including an engineering plastic; melamine or a derivative or salt thereof; and a linear or branched polyphosphonate or copolyphosphonate or combination thereof. In some embodiments, the article may be fibers, films, coatings, moldings, foams, fiber reinforced articles or combinations thereof.

Yet other embodiments of the invention include a method for preparing a polymer composition including the steps of providing an engineering plastic and mixing into said engineering plastic a melamine, melamine salt or melamine derivative and a linear or branched polyphosphonate or copolyphosphonate or combination thereof. In some embodiments, the step of mixing may be performed in a melt. In other embodiments, the method may further include the steps of mixing glass fiber and TEFLON® into the engineering plastic, melamine, melamine salt or melamine derivative and a linear or branched polyphosphonate or copolyphosphonate or combination thereof. In particular embodiments, the step of mixing may include a first mixing step, wherein the engineering plastic and melamine, melamine salt or melamine derivative are combined; and a second mixing step, wherein the linear or branched polyphosphonate or copolyphosphonate and glass fiber are mixed into the combined engineering plastic and melamine, melamine salt or melamine derivative.

### I. Detailed Description:

Before the present compositions and methods are described, it is to be understood that this invention is not limited to the particular processes, compositions, or methodologies described, as these may vary. It is also to be understood that the terminology used in the description is for the purpose of describing the particular versions or embodiments only, and is not intended to limit the scope of the present invention which will be limited only by the appended claims.

It must be noted that, as used herein, and in the appended claims, the singular forms "a", "an" and "the" include plural reference unless the context clearly dictates otherwise. Unless defined otherwise, all technical and scientific terms used herein have the same meanings as commonly understood by one of ordinary skill in the art. Although any methods similar or equivalent to those described herein can be used in the practice or testing of embodiments of the present invention, the preferred methods are now described. Nothing herein is to be construed as an admission that the invention is not entitled to antedate such disclosure by virtue of prior invention.

As used herein, the term "about" means plus or minus 10 % of the numerical value of the number with which it is being used. Therefore, about 50 % means in the range of 45 %-55 %.

"Optional" or "optionally" may be taken to mean that the subsequently described structure, event or circumstance may or may not occur, and that the description includes instances where the event occurs and instances where it does not.

The terms "flame retardant", "flame resistant", "fire resistant" or "fire resistance," as used herein, mean that the composition exhibits a limiting oxygen index (LOI) of at least 27 and/or a flame reference standard for electronic compositions UL-94.

The invention described herein is generally directed to flame retardant polymer compositions including at least one engineering polymer, at least one melamine, melamine salt or melamine derivative, and at least one linear or branched polyphosphonate or copolyphosphonate. Various embodiments of the flame retardant engineering polymer compositions of the invention may also include a reinforcement such as, for example, glass fibers which may provide the composites with a combination of fire resistance and dimensional stability while maintaining a high heat distortion temperature. Thus, the flame retardant compositions of the invention may exhibit a combination of properties that are near that of the unmodified engineering polymer.

The engineering plastics utilized in embodiments of the invention may be any engineering plastic known in the art. For example, in some embodiments, the engineering plastic may be a polymeric material such as, but not limited to, a polyester, polyamide, polycarbonate, polyacrylate, polyacrylonitrile, polystyrene, high impact strength polystyrene, syndiotactic polystyrene, poly(acrylonitrile butadiene styrene), polyurea, polyurethane, polyepoxy, polyimide, polyarylate, poly(arylene ether), polyethylene, polypropylene, polyphenylene sulfide, poly(vinyl ester), polyvinyl chloride, bismaleimide polymer, polyanhydride, and the like and copolymers of such materials. In other embodiments, the polymeric material used may be a liquid crystalline polymer, cellulose polymer, or any combination thereof, and in still other embodiments, the polymeric material may be a crystalline or semi-crystalline polymer. In particular embodiments, the engineering plastic may be a polyester, such as, but not limited to, poly(ethylene terephthalate), poly(naphthalene terephthalate), poly(butylene terephthalate) or mixtures or copolymers thereof.

Similarly, any linear or branched polyphosphonate or copolyphosphonate may be used in embodiments of the invention; however, in particular embodiments, linear or branched polyphosphonates and copolyphosphonates used may have a weight average molecular weight (Mw) of at least 20,000 g/mole as measured by gel permeation chromatography. In various embodiments, the linear or branched polyphosphonates or copolyphosphonates may be a known polyphosphonate or copolyphosphonate materials such as, for example, the polyphosphonates described in U.S. Patent No. 6,861,499 entitled "Branched Polyphosphonates that Exhibit an Advantageous Combination of Properties, and Methods Related Thereto," dated March 1, 2005. Such polyphosphonates exhibit an exceptional combination of properties including fire resistance. In other embodiments, the linear or branched polyphosphonates and copolyphosphonates may be one or more linear or branched polyphosphonates described in, for example, U.S. Patent Nos. 4,331,614, 2,716,101; 3,326,852; 4,328,174; 4,374,971; 4,415,719; 5,216,113; 5,334,692; and 4,374,971,

Copolyphosphonates useful in certain embodiments of the invention are well known in the art. For example, in some embodiments, the copolyphosphonates used in the invention may be those described in U.S. Patent Nos. 4,223,104; 4,322,520; 4,401,802; 4,481,350; 4,508,890; 4,762,905; 4,719,279; 4,782,123 or 4,332,921. In other embodiments of the invention, the copolyphosphonates used may be those described in U.S. Patent Publication No. 2007/0129511 entitled "Poly(Block-Phosphonato-Ester) And Poly(Block-Phosphonato-Carbonate) And Methods of Making Same," filed on June 7, 2007. The copolyphosphonates utilized in particular embodiments of the invention may contain at least 50 % phosphonate units, and in some embodiments, the copolyphosphonates used may be at least partially derived from monomers of diphenyl carbonate.

In certain embodiments, the linear or branched polyphosphonate or copolyphosphonate may include one or more structural units of general formula: 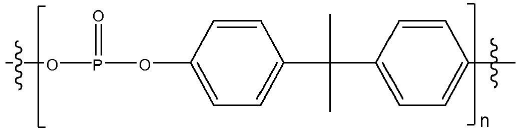 where n is an integer up to 90. In some embodiments, such branched or linear polyphosphonates or copolyphosphonates may also include one or more carbonate structural units.

The linear or branched polyphosphonates or copolyphosphonates may be prepared by any method known in the art. However, the method by which the polyphosphonate or copolyphosphonate is prepared may effect the properties of the final mixture. For example, in some embodiments, the a polyphosphonate component may be prepared by polymerization of one or more diphenyl phosphonates (DPP) and one or more bisphenol, such as, bisphenol A (BPA). The DPP and bisphenol used may be prepared by any method and combined to form polyphosphonate by any method. Additionally, other components such as, for example, branching agents and catalysts may be used in such process. In some embodiments, the DPP may be distilled following its preparation to provide DPP that is substantially free of other components. In other embodiments, the DPP used in the preparation of the polysphosphonate may be undistilled. Without wishing to be bound by theory, polymer compositions such as those described in embodiments of the invention including polyphosphonates prepared from undistilled DPP may exhibit improved properties over those polymer compositions including polyphosphonates prepared from distilled DPP. For example, in some embodiments, polymer mixture including polyphosphonates prepared from undistilled DPP may exhibit improved melt flow viscosity and may improve the rate of reaction.

Melamine, melamine salts and melamine derivatives such as, for example, melamine cyanurate are well known in the art and any such compound may be utilized in various embodiments of the invention. Melamine and its salts and derivatives is used in a variety of applications and is commercially available, for example, melamine cyanurate is available from JLS Chemical Co.

The compositions of the invention may include any amount of any of the described components that allow for the composition to retain a good combination of properties while exhibiting flame resistance. For example, in some embodiments, the composition may contain from 15 % to 90 % by weight of the total composition of the engineering plastic. In other embodiments, the compositions of the invention may include 5 % to 40 % of the branched or linear polyphosphonate or copolyphosphonate by weight of the total composition, and in still other embodiments, the compositions of the invention may include 5 % to 20 % by weight of the total composition melamine, melamine salt or a melamine derivative.

The compositions of certain embodiments of the invention may also contain other components including, but not limited to, fillers, fibers, surfactants, binders, such as, organic binders or polymeric binders, crosslinking agents, coupling agents, anti-dripping agents, colorants, inks, dyes, antioxidants or any combination thereof. Fiber reinforced composites encompassed by the invention may include reinforcements that are continuous, woven, or chopped fibers including, but not limited to, glass fibers, carbon fibers, organic fibers or inorganic fibers such as silicon carbide and various combinations of such fibers. The use of the other components described above are well known and utilized in the art and any such other component combinations of other components may be used. For example, in particular embodiments, the compositions of the invention may include glass fibers and/or TEFLON®. Such additives may be included in the compositions of the invention at concentrations that are known and used in the art. For example, in embodiments in which glass fiber is included, the glass fiber may be up to 40 % by weight of the total composition, and in embodiments in which TEFLON® is provided, TEFLON® may be up to 1 % by weight of the total composition.

Without wishing to be bound by theory, the combination of melamine or its salts or derivatives with the linear or branched polyphosphonates or copolyphosphonates may provide the salient features of the compositions of the invention. Thus, these components may be combined with a variety of commodity engineering plastics to impart fire resistance without significantly detracting from the processing characteristics or thermal properties of the engineering plastics. The compositions of the invention may be self-extinguishing such that they stop burning when removed from a flame, and any drops produced by melting of these compositions in a flame may stop burning almost instantly and do not readily propagate fire to any surrounding materials. Moreover, the compositions of the invention may not evolve noticeable smoke when a flame is applied.

The engineering plastics encompassed by various embodiments of the invention may be useful in a wide variety of applications. For example, the engineering plastic compositions of the invention can be used as coatings, or they can be used to fabricate articles, such as free-standing films, fibers, foams, molded articles and fiber reinforced composites. Such articles may be well-suited for applications requiring fire resistance.

The components of the compositions of the invention may be combined by any method known in the art. For example, various embodiments of the invention include methods of manufacture of such compositions which include combining the components of the compositions in an internal mixing device such as, but not limited to, a banbury mixer, single screw extruder or twin screw extruder. Such mixers and extruders are well known and commonly used in the art. For example, twin screw extruders useful for the production of the flame resistant engineering plastics of embodiments of the invention are manufactured by, for example, Werner and Pdleiderer or Berstorff. In particular embodiments, the components of the composition (e.g., an engineering plastic, polyphosphonate or copolyphosphonate, melamine, melamine salt or melamine derivative, additives such as antioxidants, mold release compounds, anti-drip compounds and glass) may be melt blended by heating the components to a temperature of from 200° C to 300° C during extrusion, blending or mixing.

The sequence of addition of the components of the composition can vary throughout embodiments of the invention, and without wishing to be bound by theory, the specific properties (mechanical, rheological, flame retardancy) to be achieved may be effected by the order in which the components are added. For example, in some embodiments, all of the components of the composition may be combined simultaneously. In other embodiments, the engineering plastic may be melted and other components may be added while the melted engineering plastic is being mixed. In still other embodiments, glass fiber may be added at the end of the mixing process in, for example, a feeder located near the end of the extruder. The other components can be added either at the front, in the middle or at the end of the extruder and any combination thereof. Without wishing to be bound by theory, adding glass fiber at the end of the mixing process may minimize the reduction of the aspect ratio of glass fibers in the composition.

In particular embodiments, the engineering plastic may be mixed with the melamine, melamine salt or melamine derivative in a first step, and the glass and branched or linear polyphosphonate or copolyphosphonate may be added in a second step near the end of the mixing process. For example, the engineering plastic and the melamine, melamine salt or melamine derivative may be combined and mixed and the polyphosphonate or copolyphosphonate and glass may be added near the end of the mixing process or at a feeder located near the end of an extruder. In such embodiments, the polymer composition prepared may exhibit improved properties over polymer compositions prepared by either combining all of the components simultaneously or mixing the linear or branched polyphosphonate or copolyphosphonate to the engineering plastic and melamine, melamine salt or melamine derivative simultaneously. For example, polymer compositions in which the linear or branched polyphosphonate or copolyphosphonate is added at the end of the mixing process may exhibit improved heat distortion temperature (HDT), improved impact strength and improved elongation over similar polymer compositions prepared by mixing in the linear or branched polyphosphonate or copolyphosphonate at the beginning of the mixing process.

The engineering plastic compositions described herein and prepared using such methods generally exhibit a combination of properties that include improved fire resistance when compared to engineering polymer compositions that contain monomeric or oligomeric phosphorus or melamine containing flame retardants. The engineering plastic compositions of the invention also exhibit fire resistance that is at least equal to and, in some embodiments, is superior to that of engineering plastics compositions that contain halogenated or metal containing flame retardants. Additionally, the engineering plastics compositions of embodiments of the invention also provide excellent high temperature performance, high modulus, good toughness and improved low viscosity compared to the engineering plastics alone.

Having generally described the invention, a more complete understanding thereof may be obtained by reference to the following examples that are provided for purposes of illustration only and do not limit the invention.

### EXAMPLES

### Preparation of BPA-Polyphosphonates

Into 12 L reactor equipped with a distillation column and mechanical stirrer was placed 3.329 kg of 2,2-bis-(4-hydroxyphenyl) propane (bisphenol A), 600 mg sodium phenolate catalyst, 89 g 1,1,1 tris(4-hydroxy phenyl)ethane and 3726 g methylphosphonic acid diphenyl ester (diphenylmethylphosphonate). The mixture was heated from 250° C to 300°C with reduced pressure from 150 mm Hg to 1.5 mm Hg over 15 hours period. An additional 600 mg of sodium phenolate catalyst was added at 11 hours. A noticeable, rapid increase in melt viscosity was observed over the last hour of the reaction.

Approximately 3372 g of distillate was collected over the course of the reaction. The polyphosphonate was extruded out of the reactor into a water bath to form a strand and subsequently pelletized to yield 3827 g of polyphosphonate. The branched polyphosphonate was 10.8 % phosphorous, transparent, colorless and tough and exhibited a Tg of 103° C. The product was not fully soluble in methylene chloride after 12 hours.

### EXAMPLES 1 and 2

### Branched Polyphosphonate and Polyester

Poly(butylene terephthalate) (PBT, PF300G6 from Polyram, Inc) including 30 % by weight glass fiber was melt mixed 0.6 % by weight poly(tetrafluoroethylene) (TEFLON® 6C-N) with no polyphosphonate (Example 1) or 0.6 % by weight TEFLON® with 30 % by weight of the branched polyphosphonate prepared as described above (FRX) (Example 2). These compositions were fabricated into test articles by injection molding. These fabricated articles were then tested for toughness using the notched Izod impact method; heat distortion temperature (HDT) under 1.82 MPa; and fire resistance using the UL 94 method on 0.8 mm thick specimens.

### EXAMPLES 3 and 4

### Melamine Cyanurate and Polyester

PBT containing 30 % by weight glass fiber was melt mixed with 0.6 % by weight poly(tetrafluoroethylene) and no polyphosphonate (Example 1) or 0.6 % by weight TEFLON® and 15 % by weight melamine cyanurate (MC, JLS-MC810D from JLS Chemical Co.) (Example 3) or 0.6 % by weight TEFLON® and 30 % by weight MC (Example 4). The compositions were then fabricated into test articles by injection molding. These fabricated articles were then tested for toughness using the notched Izod impact method; HDT under 1.82 MPa; and fire resistance using the UL 94 method on 0.8 mm thick specimens.

### EXAMPLES 5 and 6

### Melamine Cyanurate, Branched Polyphosphonate and Polyester

PBT containing 30 % by weight glass fiber was melt mixed with 0.6 % by weight TEFLON®, 15 % by weight MC and 15 % by weight FRX (Example 5) or 0.6 % by weight TEFLON®, 20 % be weight MC and 10 % by weight FRX (Example 6). In both Example 5 and Example 6, PBT made up 48.6 % by weight of the total composition. The compositions were fabricated into test articles by injection molding. These fabricated articles were then tested for toughness using the notched Izod impact method; HDT under 1.82 MPa; and fire resistance using the UL 94 method on 0.8 mm thick specimens..

The composition examples 1-6 in percent by weight for the total composition are presented in Table 1, and the results of thermal mechanical and fire testing are presented in Table 2.

**TABLE 1: Composition of Examples 1-6**

| Example | PBT, wt % | TEFLON®, wt % | MC, wt % | FRX, Wt % | Glass Fiber, wt % |
|---|---|---|---|---|---|
| 1 | 69.6 | 0.6 | 0 | 0 | 29.8 |
| 2 | 48.6 | 0.6 | 0 | 30 | 20.8 |
| 3 | 59.1 | 0.6 | 15 | 0 | 25.3 |
| 4 | 48.6 | 0.6 | 30 | 0 | 20.8 |
| 5 | 48.6 | 0.6 | 15 | 15 | 20.8 |
| 6 | 48.6 | 0.6 | 20 | 10 | 20.8 |

**TABLE 2: Characterization of Examples 1-6**

| Example | Notched Izod Impact, J/m | HDT, °C 1.82 MPa | Fire Resistance, UL 94 0.8 mm thick |
|---|---|---|---|
| 1 | 58.8 | 203 | NR |
| 2 | ----- | 91 | Strong V0 @ 0.4 mm |
| 3 | 34.0 | 206 | NR |
| 4 | 27.9 | 205 | NR |
| 5 | 30.9 | 177 | Strong V0 |
| 6 | 30.3 | 189 | Strong V0 |

| | | | |
|---|---|---|---|
| * NR is not fire resistant, burns to the clamp | | | |

As indicated in Table 2, glass filled PBT has good notched impact strength and HDT, but is not fire resistant (Example 1). Glass filled PBT compounded with TEFLON® and polyphosphonate (FRX) (Example 2), exhibit excellent fire resistance but the compositions demonstrate a dramatic reduction in heat distortion temperature and poor notched impact strength. Glass filled PBT compounded with TEFLON® and MC (Examples 3 and 4) exhibit good HDT and notched impact strength but is not fire resistant. As illustrated in Examples 5 and 6, glass filled PBT compounded with TEFLON®, MC and FRX exhibits an excellent combination of HDT, notched impact strength and fire resistance.

### EXAMPLE 7

### Preparation of Diphenyl Methylphosphonate

In a reaction flask equipped with an overhead stirrer, N₂ inlet, a thermometer and a condenser, triphenylphosphite (TPP) and iodomethane were mixed together at room temperature and then heated under N₂ to 240° C. No exotherm observed at this point. Dark purple discoloration is noted during heating. The addition of trimethylphosphite (TMP(i)) from the feeding funnel begins when the reaction temperature reaches 240° C and proceeds from 3.0 to 3.5 hours. No refluxing is observed during TMP(i) feeding, but noted dark purple discoloration disappears soon after the addition of TMP(i) begins. Following the addition of TMP(i), the reaction temperature is maintained at 240° C to 260° C for 3.5 hours. The reaction is terminated after a gas chromatography (GC) indicates that no trace of the starting materials is detected. The crude product may then be distilled to remove other components.
1. Undistilled diphenyl methylphosphonate, (DPP, example 7a) has a light straw color and may contain from 0 to 1.0 % phenol.
2. Distilled DPP (example 7b) is colorless and 100 % DPP is recovered after distillation with no evidence of impurities when determined using GC/MS.

### EXAMPLE 8

### Synthesis of BPA-Polyphosphonate

Both undistilled DPP (example 7a) and distilled DPP (example 7b) were used to prepare polyphosphonates as follows:

Into 6 L reactor equipped with a distillation column and mechanical stirrer was placed the 1.308 kg (5.737 mol) of 2,2-bis-(4-hydroxyphenyl) propane (bisphenol A) distilled 1467 g (5.915 mol) of diphenyl methylphosphonate (Example 9b), 35.1 g 1,1,1 tris (4-hyroxphenyl) ethane, 120mg sodium phenolate (NaOPh) catalyst, 225mg tetraphenylphosphonium phenolate (TPPOP) which is a chemical complex of tetraphenylphosphonium phenolate and phenol consisting of about 70 % and about 30 % of each, respectively (m.p. 145°C). The mixture was heated from 250° C to 300° C while reducing the pressure from 150 to 1.5 mm Hg over 10 hours. A noticeable, rapid increase in solution viscosity of the melt was observed over the last hour of the reaction. Approximately 1227 g of distillate was collected over the course of the reaction. The polyphosphonate was extruded out of the reactor into a water bath to form a strand that was subsequently pelletized and resulted in a yield of 1476 g of polyphosphonate.

The polyphosphonate prepared from undistilled DPP (example 8a) was transparent, nearly colorless and tough with a Tg of 104°C and a 10.8 % phosphorous. The product was not fully soluble as 0.5 % solution in Methylene chloride after 12 hours

The polyphosphonate prepared from distilled DPP (example 8b) was transparent, nearly colorless and tough and exhibited a ηre1=1.41 (measured as 0.5 % solution in CH₂Cl₂) and a Tg of 106° C. The percentage of phosphorous in this polymer was 10.8 %. The molecular weight, measured by GPC with refractive index detector based on PS standard, showed Mn=10657 and an Mw=75955 with a polydispersity of 7.1.

### EXAMPLE 9

### Glass Reinforced Flame Retardant Polybutylene Terephthalate

In this example, the polyphosphonate produced from a undistilled diphenyl methylphosphonate (Example 8a) was used.

Into a twin screw extruder are added 10 % by weight MC, 39.5 % by weight PBT, 20 % by weight polyphosphonate prepared as described in Example 8a, 30 % by weight glass fiber and 0.5 % by weight TEFLON®. All ingredients other then glass were added at the front of the extruder and glass at the end of the extruder. The extruder is operated at a temperature range of between 230° C to 280° C and at a screw RPM of 100 to 5000.

### Resulting properties:

UL 94 V0 at 1.6 mm
Tensile Strength at break: 121 Mpa
Elongation at break: 1.3 %
MFR (250C/5Kg): 51 g/10 min

### EXAMPLE 10

### Glass Reinforced Flame Retardant Polybutylene Terephthalate Composition

In this example, we use a polyphosphonate produced from a diphenyl methyl phosphonate manufactured via the method described in Example 8b.

Into a twin screw extruder are added 10 % by weight MC, 39.5 % by weight PBT, 20 % by weight branched polyphosphonate prepared as described in example 8b, 30 % by weight glass fiber and 0.5 % by weight TEFLON®. All ingredients other then glass were added at the front of the extruder and glass at the end of the extruder. Alternatively, the polyphosphonate can be added together with the glass at the end of the extruder and all other ingredients at the front of the extruder. The extruder is operated at a temperature range of between 230° C to 280° C and at a screw RPM of 100 to 5000.

### Resulting properties:

UL 94 V0 at 1.6 mm
Tensile Strength at break: 118 Mpa
Elongation at break: 1.4 %
MFR (250C/5Kg): 17 g/10 min

### EXAMPLE 11

Polyphosphonate prepared from distilled DPP (example 8b) was used in the following example.

Into a twin screw extruder were added 39 % by weight PBT, 15 % by weight MC, 15 % by weight polyphosphonate prepared from distilled DPP as described in Example 8b, 0.6 % by weight TEFLON and 0.4 % by weight additives, and these components were mixed. Through a feeder at the end of the extruder, 30 % by weight glass fiber was added to produce polymer mixture example 11 a, or

Into a twin screw extruder were added 39 % by weight PBT, 10 % by weight MC, 0.6 % by weight TEFLON and 0.4 % by weight additives, and these components were mixed. Through a feeder at the end of the extruder, 15 % by weight polyphosphonate prepared from distilled DPP as described in Example 8b and 30 % by weight glass fiber were added to produce polymer mixture example 11b.

**TABLE 3: Comparison of examples 11a and 11b**

| | Example 11a | Example 11b |
|---|---|---|
| HDT(1.82 Mpa) | 154° C | 181° C |
| Notched Impact Resistance (KJ/m²) | 5.1 | 6.2 |
| UL 94 | V0 at 0.8mm | V0 at 0.8mm |
| Elongation at break | 1.1 | 1.5 |
| Tensile Strength (MPa) | 100.1 | 113.1 |
| MFR (250C/5Kg) | 10 | 7.1 |

## Claims

1. A polymer composition comprising:
an engineering plastic;
melamine or a derivative or salt thereof; and
a linear or branched polyphosphonate or copolyphosphonate or combination thereof,
each of the polyphosphonate or copolyphosphonate having a weight average molecular weight (Mw) of at least 20,000.

2. The composition of claim 1, wherein the engineering plastic is 15 % to 90 % by weight of the total composition.

3. The composition of claim 1, wherein the engineering plastic is selected from polycarbonates, polyacrylates, polyacrylonitriles, polyesters, polyamides, polystyrenes, polyureas, polyurethanes, polyepoxides, poly(acrylonitrile butadiene styrene)s, polyimides, polyarylates, poly(arylene ether)s, polyethylenes, polypropylenes, polyphenylene sulfides, poly(vinyl ester)s, polyvinyl chloride, bismaleimide polymer, polyanhydride, liquid crystalline polymer, cellulose polymer and copolymers and combinations thereof, optionally wherein the engineering plastic is selected from poly(ethylene terephthalate), poly(butylene terephthalate), poly(naphthylene terephthalate) or mixtures or copolymers thereof.

4. The composition of claim 1, wherein the engineering plastic is crystalline or semi-crystalline.

5. The composition of claim 1, wherein the melamine or a derivative or salt thereof is melamine cyanurate or wherein the melamine or a derivative or salt thereof is 5 % to 20 % by weight of the total composition.

6. The composition of claim 1, wherein the linear or branched polyphosphonate or copolyphosphonate is 5 % to 40 % by weight of the total composition.

7. The composition of claim 1, wherein the linear or branched polyphosphonate or copolyphosphonate comprises one or more blocks having one or more structural units of formula: 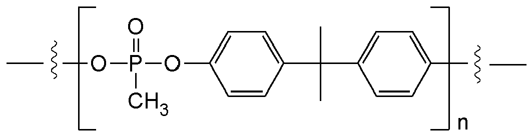 wherein n is an integer,
preferably wherein the linear or branched polyphosphonate or copolyphosphonate further comprises one or more carbonates.

8. The composition of claim 1, further comprising one or more components selected from filler, glass fibers, carbon fibers, inorganic fibers, organic fibers, fillers, surfactants, organic binders, polymeric binders, cross-linking agents, coupling agents, anti-dripping agents, teflon, colorants, inks, dyes, antioxidants and combinations thereof.

9. The composition of claim 1, further comprising up to 1 % by weight of the total composition teflon or up to 40 % by weight of the total composition glass fiber.

10. The composition of claim 1, wherein the linear or branched polyphosphonate or copolyphosphonate is prepared from phosphonic diaryl ester that is distilled or wherein the linear or branched polyphosphonate or copolyphosphonate is prepared from phosphonic acid diaryl ester that is undistilled.

11. An article of manufacture produced from a polymer composition comprising:
an engineering plastic;
melamine or a derivative or salt thereof; and
a linear or branched polyphosphonate or copolyphosphonate or combination thereof,
each of the polyphosphonate or copolyphosphonate having a weight average molecular weight (Mw) of at least 20,000.

12. The article of manufacture of claim 11, wherein the article is selected from fibers, films, coatings, moldings, foams, fiber reinforced articles or combinations thereof.

13. A method for preparing a polymer composition comprising:
providing an engineering plastic; and
mixing into said engineering plastic a melamine, melamine salt or melamine derivative and a linear or branched polyphosphonate or copolyphosphonate or combination thereof, each of the polyphosphonate or copolyphosphonate having a weight average molecular weight (Mw) of at least 20,000,
optionally wherein the step of mixing is performed in a melt.

14. The method of claim 13, further comprising mixing glass fiber and teflon into the engineering plastic, melamine, melamine salt or melamine derivative and a linear or branched polyphosphonate or copolyphosphonate or combination thereof.

15. The method of claim 13, wherein the step of mixing comprises:
a first mixing step, wherein the engineering plastic and melamine, melamine salt or melamine derivative are combined; and
a second mixing step, wherein the linear or branched polyphosphonate or copolyphosphonate and glass fiber are mixed into the combined engineering plastic and melamine, melamine salt or melamine derivative.

## Patentansprüche

1. Eine Polymerzusammensetzung, die Folgendes beinhaltet:
einen technischen Kunststoff;
Melamin oder ein Derivat oder Salz davon; und
ein lineares oder verzweigtes Polyphosphonat oder Copolyphosphonat oder eine Kombination davon,
wobei jedes von dem Polyphosphonat oder Copolyphosphonat ein Gewichtsmittel der Molmasse (Mw) von mindestens 20 000 aufweiset.

2. Zusammensetzung gemäß Anspruch 1, wobei der technische Kunststoff 15 bis 90 Gew.-% der Gesamtzusammensetzung ausmacht.

3. Zusammensetzung gemäß Anspruch 1, wobei der technische Kunststoff aus Folgendem ausgewählt ist: Polycarbonaten, Polyacrylaten, Polyacrylnitrilen, Polyestern, Polyamiden, Polystyrolen, Polyharnstoffen, Polyurethanen, Polyepoxiden, Poly(acrylnitrilbutadienstyrolen), Polyimiden, Polyarylaten, Poly(arylenethern), Polyethylenen, Polypropylenen, Polyphenylensulfiden, Poly(vinylestern), Polyvinylchlorid, Bismaleimidpolymer, Polyanhydrid, flüssigkristallinem Polymer, Cellulosepolymer und Copolymeren und Kombinationen davon, wobei optional der technische Kunststoff aus Poly(ethylenterephthalat), Poly(butylenterephthalat), Poly(naphthylenterephthalat) oder Mischungen oder Copolymeren davon ausgewählt ist.

4. Zusammensetzung gemäß Anspruch 1, wobei der technische Kunststoff kristallin oder teilkristallin ist.

5. Zusammensetzung gemäß Anspruch 1, wobei das Melamin oder ein Derivat oder Salz davon Melamincyanurat ist oder wobei das Melamin oder ein Derivat oder Salz davon 5 bis 20 Gew.-% der Gesamtzusammensetzung ausmacht.

6. Zusammensetzung gemäß Anspruch 1, wobei das lineare oder verzweigte Polyphosphonat oder Copolyphosphonat 5 bis 40 Gew.-% der Gesamtzusammensetzung ausmacht.

7. Zusammensetzung gemäß Anspruch 1, wobei das lineare oder verzweigte Polyphosphonat oder Copolyphosphonat einen oder mehrere Blöcke mit einer oder mehreren Struktureinheiten folgender Formel beinhaltet: 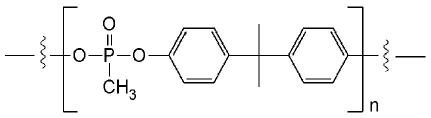 wobei n eine ganze Zahl ist,
wobei vorzugweise das lineare oder verzweigte Polyphosphonat oder Copolyphosphonat ferner ein oder mehrere Carbonate beinhaltet.

8. Zusammensetzung gemäß Anspruch 1, die ferner eine oder mehrere Komponenten beinhaltet, die aus Folgendem ausgewählt sind: Füllstoff, Glasfasern, Kohlenstofffasern, anorganischen Fasern, organischen Fasern, Füllstoffen, Tensiden, organischen Bindemitteln, polymeren Bindemitteln, Vernetzungsmitteln, Haftmitteln, Antitropfmitteln, Teflon, Farbmitteln, Tinten, Farbstoffen, Antioxidationsmitteln und Kombinationen davon.

9. Zusammensetzung gemäß Anspruch 1, die ferner bis zu 1 Gew.-% der Gesamtzusammensetzung an Teflon oder bis zu 40 Gew.-% der Gesamtzusammensetzung an Glasfaser beinhaltet.

10. Zusammensetzung gemäß Anspruch 1, wobei das lineare oder verzweigte Polyphosphonat oder Copolyphosphonat aus Phosphondiarylester hergestellt ist, der destilliert ist, oder wobei das lineare oder verzweigte Polyphosphonat oder Copolyphosphonat aus Phosphonsäurediarylester hergestellt ist, der nicht destilliert ist.

11. Ein Herstellungsartikel, produziert aus einer Polymerzusammensetzung, beinhaltend:
einen technischen Kunststoff;
Melamin oder ein Derivat oder Salz davon; und
ein lineares oder verzweigtes Polyphosphonat oder Copolyphosphonat oder eine Kombination davon,
wobei jedes von dem Polyphosphonat oder Copolyphosphonat ein Gewichtsmittel der Molmasse (Mw) von mindestens 20 000 aufweiset.

12. Herstellungsartikel gemäß Anspruch 11, wobei der Artikel aus Fasern, Folien, Beschichtungen, Formen, Schaumstoffen, faserverstärkten Artikeln oder Kombinationen davon ausgewählt ist.

13. Ein Verfahren zum Herstellen einer Polymerzusammensetzung, beinhaltend:
Bereitstellen eines technischen Kunststoffs; und
Mischen in den technischen Kunststoff eines Melamins, Melaminsalzes oder Melaminderivats und eines linearen oder verzweigte Polyphosphonats oder Copolyphosphonats oder einer Kombination davon, wobei jedes von dem Polyphosphonat oder Copolyphosphonat ein Gewichtsmittel der Molmasse (Mw) von mindestens 20 000 aufweist,
wobei optional der Schritt des Mischens in einer Schmelze durchgeführt wir.

14. Verfahren gemäß Anspruch 13, das ferner das Mischen von Glasfaser und Teflon in den technischen Kunststoff, das Melamin, Melaminsalz oder Melaminderivat und ein lineares oder verzweigtes Polyphosphonat oder Copolyphosphonat oder eine Kombination davon beinhaltet.

15. Verfahren gemäß Anspruch 13, wobei der Schritt des Mischens Folgendes beinhaltet:
einen ersten Mischschritt, wobei der technische Kunststoff und das Melamin,
Melaminsalz oder Melaminderivat kombiniert werden; und
einen zweiten Mischschritt, wobei das lineare oder verzweigte Polyphosphonat oder Copolyphosphonat und Glasfaser in die Kombination aus technischem Kunststoff und Melamin, Melaminsalz oder Melaminderivat gemischt werden.

## Revendications

1. Une composition de polymère comprenant :
un plastique industriel ;
de la mélamine ou un dérivé ou sel de celle-ci ; et
un polyphosphonate ou copolyphosphonate linéaire ou ramifié ou une combinaison de ceux-ci,
chacun des polyphosphonate ou copolyphosphonate ayant une masse moléculaire moyenne en poids (Mw) d'au moins 20 000.

2. La composition de la revendication 1, dans laquelle le plastique industriel constitue de 15 % à 90 % en poids de la composition totale.

3. La composition de la revendication 1, dans laquelle le plastique industriel est sélectionné parmi des polycarbonates, des polyacrylates, des polyacrylonitriles, des polyesters, des polyamides, des polystyrènes, des polyurées, des polyuréthanes, des polyépoxydes, des poly(acrylonitrile butadiène styrène), des polyimides, des polyarylates, des poly(éthers d'arylène), des polyéthylènes, des polypropylènes, des sulfures de polyphénylène, des poly(esters de vinyle), le chlorure de polyvinyle, un polymère de bismaléimide, un polyanhydride, un polymère à cristaux liquides, un polymère de cellulose et des copolymères et des combinaisons de ceux-ci, facultativement dans laquelle le plastique industriel est sélectionné parmi le poly(éthylène téréphtalate), le poly(butylène téréphtalate), le poly(naphtylène téréphtalate) ou des mélanges ou des copolymères de ceux-ci.

4. La composition de la revendication 1, dans laquelle le plastique industriel est cristallin ou semi-cristallin.

5. La composition de la revendication 1, dans laquelle la mélamine ou un dérivé ou sel de celle-ci est le cyanurate de mélamine ou dans laquelle la mélamine ou un dérivé ou sel de celle-ci constitue de 5 % à 20 % en poids de la composition totale.

6. La composition de la revendication 1, dans laquelle le polyphosphonate ou copolyphosphonate linéaire ou ramifié constitue de 5 % à 40 % en poids de la composition totale.

7. La composition de la revendication 1, dans laquelle le polyphosphonate ou copolyphosphonate linéaire ou ramifié comprend un ou plusieurs blocs ayant une ou plusieurs unités structurales de la formule : 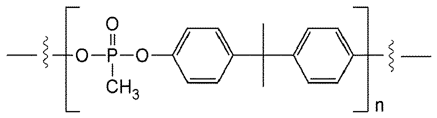 dans laquelle n est un nombre entier,
de préférence dans laquelle le polyphosphonate ou copolyphosphonate linéaire ou ramifié comprend en outre un ou plusieurs carbonates.

8. La composition de la revendication 1, comprenant en outre un ou plusieurs constituants sélectionnés parmi une charge, des fibres de verre, des fibres de carbone, des fibres inorganiques, des fibres organiques, des charges, des agents tensioactifs, des liants organiques, des liants polymères, des agents de réticulation, des agents de couplage, des agents anti-goutte, le téflon, des colorants, des encres, des teintures, des antioxydants et des combinaisons de ceux-ci.

9. La composition de la revendication 1, comprenant en outre jusqu'à 1 % en poids de la composition totale de téflon ou jusqu'à 40 % en poids de la composition totale de fibre de verre.

10. La composition de la revendication 1, dans laquelle le polyphosphonate ou copolyphosphonate linéaire ou ramifié est préparé à partir d'ester de diaryle phosphonique qui est distillé ou dans laquelle le polyphosphonate ou copolyphosphonate linéaire ou ramifié est préparé à partir d'ester de diaryle d'acide phosphonique qui est non distillé.

11. Un article manufacturé produit à partir d'une composition de polymère comprenant :
un plastique industriel ;
de la mélamine ou un dérivé ou sel de celle-ci ; et
un polyphosphonate ou copolyphosphonate linéaire ou ramifié ou une combinaison de ceux-ci,
chacun des polyphosphonate ou copolyphosphonate ayant une masse moléculaire moyenne en poids (Mw) d'au moins 20 000.

12. L'article manufacturé de la revendication 11, l'article étant sélectionné parmi des fibres, des films, des revêtements, des moulages, des mousses, des articles renforcés par des fibres ou des combinaisons de ceux-ci.

13. Une méthode pour préparer une composition de polymère comprenant :
le fait de fournir un plastique industriel ; et
le fait de mélanger dans ledit plastique industriel une mélamine, un sel de mélamine ou un dérivé de mélamine et un polyphosphonate ou copolyphosphonate linéaire ou ramifié ou une combinaison de ceux-ci, chacun des polyphosphonate ou copolyphosphonate ayant une masse moléculaire moyenne en poids (Mw) d'au moins 20 000,
facultativement dans laquelle l'étape consistant à mélanger est effectuée dans un bain de fusion.

14. La méthode de la revendication 13, comprenant en outre le fait de mélanger de la fibre de verre et du téflon dans le plastique industriel, la mélamine, le sel de mélamine ou le dérivé de mélamine et un polyphosphonate ou copolyphosphonate linéaire ou ramifié ou une combinaison de ceux-ci.

15. La méthode de la revendication 13, dans laquelle l'étape consistant à mélanger comprend :
une première étape de mélange, dans laquelle le plastique industriel et la mélamine, le sel de mélamine ou le dérivé de mélamine sont combinés ; et
une deuxième étape de mélange, dans laquelle le polyphosphonate ou copolyphosphonate linéaire ou ramifié et la fibre de verre sont mélangés dans le plastique industriel et la mélamine, le sel de mélamine ou le dérivé de mélamine combinés.
